(19) Europäisches Patentamt / European Patent Office / Office européen des brevets

(11) **EP 4 576 700 A1**

(12) **DEMANDE DE BREVET EUROPEEN**

(43) Date de publication:
**25.06.2025 Bulletin 2025/26**

(21) Numéro de dépôt: **24218823.3**

(22) Date de dépôt: **10.12.2024**

(51) Classification Internationale des Brevets (IPC):
**H04L 41/084** (2022.01)  **H04L 41/14** (2022.01)
**H04L 41/147** (2022.01)  **H04L 41/0266** (2022.01)
**H04L 41/12** (2022.01)

(52) Classification Coopérative des Brevets (CPC):
**H04L 41/084; H04L 41/145; H04L 41/147;**
H04L 41/0266; H04L 41/12

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **21.12.2023 FR 2314835**
**30.05.2024 FR 2405646**

(71) Demandeur: **Commissariat à l'Energie Atomique et aux Energies Alternatives**
**75015 Paris (FR)**

(72) Inventeurs:
• **KELLIL, Mounir**
**91191 GIF-SUR-YVETTE CEDEX (FR)**
• **BEN HADJ SAID, Siwar**
**91191 GIF-SUR-YVETTE CEDEX (FR)**
• **THI, Minh-Thuyen**
**91191 GIF-SUR-YVETTE CEDEX (FR)**
• **OLIVEREAU, Alexis**
**91191 GIF-SUR-YVETTE CEDEX (FR)**
• **JANNETEAU, Christophe**
**91191 GIF-SUR-YVETTE CEDEX (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCEDE ET DISPOSITIF DE CONSTRUCTION D'UN JUMEAU NUMERIQUE RESEAU D'UN RESEAU DE COMMUNICATION**

(57) L'invention concerne un procédé de construction d'un jumeau numérique réseau d'un réseau de communication physique composé d'une pluralité d'équipements et de liens entre les équipements, et consommant des ressources. Le procédé comprend une phase d'initialisation d'un jumeau numérique réseau, et une phase de construction incrémentale du jumeau numérique réseau. Les étapes de la construction incrémentale sont itérées jusqu'à l'atteindre d'une condition de fin.

FIG.2

EP 4 576 700 A1

## Description

## Domaine de l'invention

La présente invention concerne le domaine de la gestion des réseaux de communication. Plus particulièrement, l'invention s'intéresse à la construction d'un jumeau numérique réseau d'un réseau de communication physique (réel).

## Etat de la technique

Les réseaux de communication connaissent aujourd'hui une croissance exponentielle à la fois en termes de déploiement d'infrastructures réseau (notamment ceux des opérateurs à travers l'évolution progressive et soutenue vers la 6G), mais aussi en termes de machines, couvrant un large éventail d'équipements allant des serveurs Cloud aux composants IoT embarqués légers (par exemple les « System on Chip » SoC) en passant par les terminaux mobiles comme les téléphones intelligents (« smartphones »).

Cet écosystème est d'autant plus riche en équipements qu'en composants logiciels allant de l'application (comme par exemple le « streaming » Audio/Vidéo) jusqu'aux protocoles des différentes couches de communication réseau.

Un tel écosystème, lorsqu'il est opérationnel, se trouve en perpétuel changement, des changements dont la nature peut être explicitée dans ce qui suit :

- changements dans la topologie réseau : en raison par exemple, de défaillances matérielles ou logicielles, de la mobilité des utilisateurs, de politiques de gestion des ressources réseau de l'opérateur, etc.

- changements dans le taux d'utilisation/consommation des ressources réseau (bande passante, mémoire, CPU, batterie, etc.) en raison des besoins des utilisateurs et des politiques de gestion des ressources réseau de l'opérateur, etc.

Pour assurer une supervision, ou plus généralement, une gestion de tels réseaux de communication, qu'elle soit fine ou synthétique/sommaire, divers services ou plateformes de gestion des réseaux peuvent être utilisés, seuls ou combinés. Il est possible de citer les services comme SNMP, CMIP, LWM2M, CoMI, SDN, etc. bien connus de l'homme de l'art.

Cependant, de tels services ne garantissent pas une configuration ou une reconfiguration sans risque ou sans erreur intrinsèque. Ceci se retrouve dans des cas d'usage assez communs et critiques comme l'optimisation temps-réel du réseau, l'analyse de tests en mode opérationnel (les analyses de type « what-if »), la planification de mises à jour ou de modernisations ou d'extensions du réseau de communication, etc.

Pour de tels scénarios, un nouveau paradigme de gestion réseau a vu le jour ces dernières années à travers une technologie utilisant un « jumeau numérique réseau » aussi désigné comme « Network Digital Twin » en anglais et d'acronyme (NDT).

Le document de C. Zhou et al., « Digital Twin Network: Concepts and Référence Architecture », Internet Draft, July 2023, Work In Progress, fournit les définitions de base et les principes de la technologie du jumeau numérique réseau.

Le NDT est défini comme étant un jumeau numérique d'un réseau physique, i.e. d'un réseau physique qui est désigné comme « Physical Twin Network » en anglais et d'acronyme (PTN). Il est possible avec un NDT de manipuler sans risque, une copie numérique du réseau réel, i.e. le réseau physique. Ceci permet notamment de visualiser, de prédire l'évolution ou le comportement ou l'état du réseau physique, si telle ou telle configuration réseau devait être appliquée.

Au-delà de cet aspect de prédiction, le NDT et le PTN échangent des informations via une ou plusieurs interfaces de communication dans le but de maintenir une bonne synchronisation entre eux.

Cependant, la mise en place d'un jumeau numérique réseau (NDT) n'est pas une tâche simple. En effet, la synchronisation PTN-NDT, en particulier lorsqu'elle est fréquente ou en temps réel, pose un problème de passage à l'échelle (ou « scalability » selon l'anglicisme consacré) lorsqu'il est question de réseaux complexes où chaque information réseau est susceptible d'être rapportée au niveau du NDT.

Un réseau est généralement considéré comme étant complexe dès lors qu'il contient un nombre d'entités réseau très important et/ou des topologies très dynamiques et/ou un volume important d'informations par noeud/par lien réseau, par exemple.

Dans le document précité, il est rappelé la difficulté et le challenge de pouvoir représenter par un jumeau numérique un réseau physique de grande ampleur.

Divers travaux scientifiques ont tenté de traiter la question du jumeau numérique réseau (NDT), comme par exemple l'article de L. U. Khan et al., «Digital-Twin-Enabled 6G: Vision, Architectural Trends, and Future Directions », IEEE Communications Magazine, pp. 74-80, 2022. Dans ce document, il est question de définir des scénarios, des exigences et une architecture du NDT. Cependant, la question du passage à l'échelle dans le NDT n'est pas été traitée, et de manière générale n'est pas abordée dans la littérature.

Il existe donc un besoin d'une solution appropriée pour la gestion des réseaux complexes de communication et notamment pour résoudre le problème du passage à l'échelle inhérent à l'utilisation du jumeau numérique réseau pour la gestion de tels réseaux.

La présente invention répond à ce besoin.

**Résumé de l'invention**

Un but de la présente invention est de remédier aux inconvénients précités, en proposant un procédé et un dispositif associé pour construire une représentation virtuelle d'un réseau de communication, en particulier construire un jumeau numérique réseau.

Le principe général de l'invention pour résoudre le problème technique du passage à l'échelle mentionné ci-dessus, consiste à utiliser deux mécanismes, qui sont d'une part une procédure dite de « zoom/dé-zoom » du réseau de communication physique selon le niveau de détails requis pour une partie du réseau de communication physique, et d'autre part une procédure de « clustering » incrémentale en vue d'élaborer un jumeau numérique réseau complet et holistique d'un réseau de communication physique.

Ces deux méthodes se basent sur des mécanismes de synchronisations et resynchronisations périodiques entre un ensemble de composants du réseau physique, le PTN, et les composants virtuels associés dans le jumeau numérique réseau, le NDT.

L'avantage principal de la présente invention est que les synchronisations périodiques ciblent à chaque fois une partie du réseau de communication PTN, ce qui permet un gain significatif en consommation des ressources réseau (en termes de bande passante, de mémoire, de CPU, d'énergie) tout en supervisant/gérant de manière intelligente le réseau de communication PTN, c'est-à-dire en ne collectant que des paramètres pertinents du réseau (grâce à la procédure zoom/dé-zoom) et en procédant à une génération incrémentale du jumeau numérique complet du réseau de communication (grâce à la procédure de clustering incrémentale).

L'invention trouvera des applications avantageuses dans de nombreux domaines techniques utilisant des réseaux de communication critiques tels que les réseaux industriels, les réseaux véhiculaires, les réseaux opérateurs, les « smartgrids », etc.

Dans de tels réseaux, l'invention peut servir pour l'optimisation temps-réel du réseau, l'analyse de tests en mode opérationnel, la planification de mises à jour ou modernisations ou extensions du réseau de communication, par exemple.

Pour obtenir les résultats recherchés, il est proposé un procédé de construction d'un jumeau numérique réseau d'un réseau de communication physique (réel), le réseau physique étant composé d'une pluralité d'équipements et de liens entre les équipements, et consommant des ressources.

Le procédé est mis en oeuvre par ordinateur et comprend une phase d'initialisation et une phase incrémentale répétée jusqu'à l'atteindre d'une condition de fin.

La phase d'initialisation d'un jumeau numérique réseau consiste à :

- recevoir une liste d'objets désignant la pluralité des équipements et des liens du réseau physique, chaque objet désignant un équipement réseau ou un lien réseau ;

- sélectionner un premier groupe d'objets parmi la liste d'objets, un groupe d'objets regroupant des équipements et des liens entre ces équipements ;

- générer un descriptif de groupe pour le premier groupe d'objet, un descriptif de groupe constituant une représentation pour le jumeau numérique réseau d'un groupe d'objets sous la forme d'une structure arborescente, et comprenant des informations relatives aux équipements et aux liens dudit groupe d'objets et des informations relatives à des ressources associées à chaque objet dudit groupe d'objets.

La phase de construction incrémentale d'un jumeau numérique réseau qui suit la phase d'initialisation, comprend des étapes successives consistant chacune à :

- sélectionner un nouveau groupe d'objets parmi la liste d'objets ; et

- générer un descriptif de groupe pour ledit nouveau groupe d'objets, tel que le descriptif de groupe dudit nouveau groupe d'objets est différent de chaque descriptif de groupe généré aux étapes précédentes ;

les étapes successives sont itérées jusqu'à l'atteindre d'une condition de fin.

La présente invention peut être mise en oeuvre selon des modes de réalisation alternatifs ou combinés, tels que ceux-ci-après.

Dans un mode de réalisation, l'étape de recevoir une liste d'objets comprend une étape consistant à envoyer une requête à un serveur de gestion réseau du réseau physique, et à recevoir une liste comprenant un identifiant de chaque équipement réseau et un identifiant pour chaque lien réseau.

Dans un mode de réalisation, l'étape de sélectionner un premier groupe d'objets ou l'étape de sélectionner un nouveau groupe d'objets consiste à sélectionner un groupe d'objets en fonction d'évènements survenus dans le réseau physique.

Dans un mode de réalisation, lequel l'étape de sélectionner un premier groupe d'objets ou l'étape de sélectionner un nouveau groupe d'objets consiste à sélectionner un groupe d'objets sur la base d'une fonction pseudo-aléatoire par exemple sur un intervalle.

Dans un mode de réalisation, l'étape de sélectionner un premier groupe d'objets ou l'étape de sélectionner un nouveau groupe d'objets consiste à sélectionner un groupe d'objets en fonction d'une taille de groupe.

Dans un mode de réalisation, l'étape de générer un descriptif de groupe pour un groupe d'objets consiste à envoyer une requête de descriptif à un serveur de gestion réseau du réseau physique, à recevoir une liste de ressources comprenant l'ensemble des ressources associées à chaque objet dudit groupe, et à générer une description structurée et hiérarchique des objets et des ressources associées à chaque objet dudit groupe d'objets.

Dans un mode de réalisation, l'étape de générer un descriptif de groupe pour un groupe d'objets comprend de plus une étape consistant à unir différents objets, représentés à travers leur descriptif.

Dans un mode de réalisation, l'étape de générer un descriptif de groupe pour un nouveau groupe d'objets, comprend une étape consistant à comparer l'ensemble des objets du nouveau groupe à l'ensemble des objets de tous les groupes générés précédemment.

Dans un mode de réalisation, le procédé comprend de plus pour chaque étape successive une étape consistant à générer une prédiction pour le dernier descriptif de groupe d'objets généré.

Dans un mode de réalisation, le procédé comprend de plus une étape consistant à comparer un descriptif de groupe d'objets prédit avec un descriptif des objets correspondants du réseau physique, et une étape consistant à resynchroniser les deux descriptifs en cas de différence.

Dans un mode de réalisation, l'étape de comparaison consiste à déterminer des différences entre les objets d'un groupe d'objets prédit et un groupe d'objets du réseau physique, et à déterminer des différences entre les ressources présentes pour le groupe d'objets prédit et le groupe d'objets du réseau physique.

Dans un mode de réalisation, l'étape de resynchronisation met en oeuvre des protocoles de gestion de réseau de type SNMP, CoAP, MQTT, XML.

Dans un mode de réalisation, l'étape de resynchronisation est mise en oeuvre à une fréquence en fonction de la valeur de la différence.

Dans un mode de réalisation, le procédé comprend de plus une étape de zoom sur un groupe d'objets permettant d'obtenir plus d'informations du réseau physique sur les ressources dudit groupe d'objets.

Dans un mode de réalisation, le procédé comprend de plus une étape de dé-zoom sur un groupe d'objets permettant d'obtenir moins d'informations du réseau physique sur les ressources par objet dudit groupe d'objets.

Dans un mode de réalisation, l'étape de dé-zoom comprend une étape consistant à réduire le nombre d'objets d'un groupe d'objets et à générer un nouveau descriptif d'objets.

Dans un mode de réalisation, les étapes successives sont itérées jusqu'à l'atteinte d'une représentation du réseau physique par un jumeau numérique réseau.

Un autre objet de l'invention est un produit programme d'ordinateur qui comprenant des instructions de code permettant d'effectuer les étapes du procédé selon l'invention, lorsque le programme est exécuté sur un ordinateur.

L'invention adresse aussi un dispositif de construction d'un jumeau numérique réseau d'un réseau de communication physique, le réseau physique étant composé d'une pluralité d'équipements et de liens entre les équipements, et consommant des ressources, le dispositif comprenant des moyens pour mettre en oeuvre le procédé de l'invention dans ses différents modes de réalisation.

## Description des figures

Différents aspects et avantages de l'invention vont apparaitre en appui de la description d'un mode préféré d'implémentation de l'invention mais non limitatif, avec référence aux figures ci-dessous :

La figure 1 est une représentation schématique d'un contexte pour mettre en oeuvre le procédé de l'invention dans un mode de réalisation.

La figure 2 est un logigramme des étapes du procédé de construction d'un jumeau numérique réseau dans un mode de réalisation.

La figure 3 est une illustration d'une structure arborescente selon l'invention pour représenter l'information réseau par des groupes d'objets.

La figure 4 est un exemple pour illustrer un descriptif de groupe d'objets et des ressources associées, pour un jumeau numérique réseau construit selon les principes de l'invention.

La figure 5 est un logigramme détaillant des étapes de la phase d'initialisation d'un jumeau numérique réseau selon un mode de réalisation de l'invention.

Les figures 6a à 6d sont une représentation d'une construction incrémentale d'un jumeau numérique réseau d'un réseau physique, selon les principes de l'invention.

La figure 7 est un logigramme des étapes de la phase de construction incrémentale d'un jumeau numérique réseau selon un mode de réalisation de l'invention.

La figure 8 est une représentation d'une construction incrémentale d'un jumeau numérique réseau d'un réseau physique selon un mode de réalisation avec prédiction de descriptif de groupes d'objets.

La figure 9 est un logigramme des étapes de resynchronisation d'un groupe d'objets selon un mode de réalisation de l'invention.

## Description détaillée de l'invention

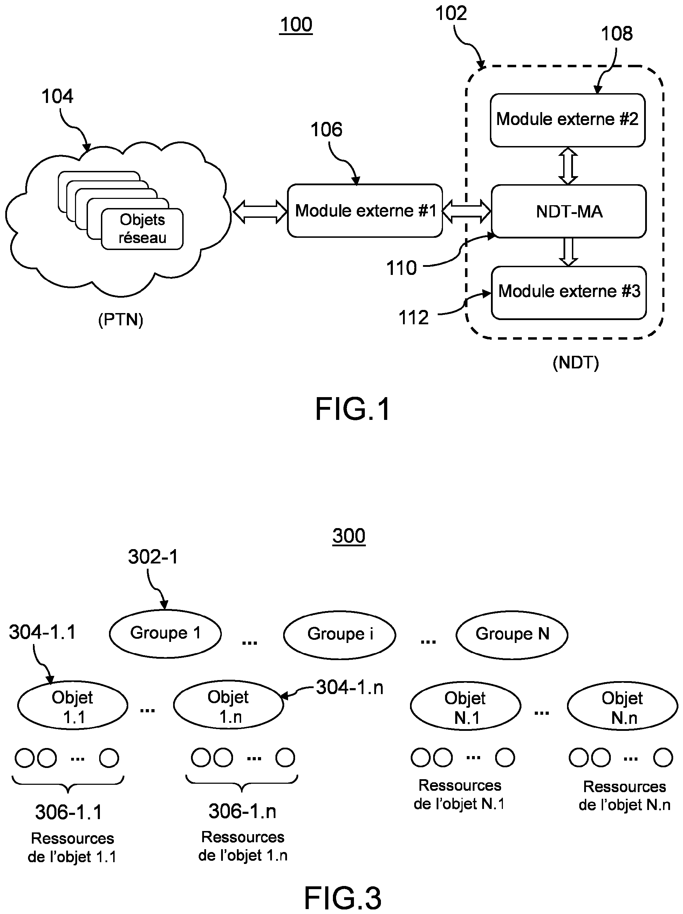

La figure 1 est une représentation schématique d'un contexte pour mettre en oeuvre le procédé de l'invention pour construire un jumeau numérique réseau 102 d'un réseau de communication réel ou réseau physique 104, composé d'une pluralité d'équipements, de liens entre les équipements, et consommant des ressources.

Le dispositif de l'invention est basé sur un module central 110 ou agent gestionnaire du jumeau numérique du réseau, aussi désigné par l'acronyme (NDT-MA) pour « Network Digital Twin Management Agent » en anglais. Le module central NDT-MA permet la construction et la gestion d'un jumeau numérique réseau, et il comprend des interfaces d'entrées/sorties (E/S) vers différents modules externes (106, 108, 112). Il est à noter que les fonctionnalités associées aux modules externes ne sont pas dans le périmètre de l'invention.

Une première interface E/S permet au module central NDT-MA de communiquer avec un premier module externe 108 qui est un serveur conventionnel de gestion du réseau physique. Le serveur peut par exemple être un serveur réseau SNMP, CMIP, LWM2M, CoMI, SDN, etc.

Une deuxième interface E/S permet au module central NDT-MA de communiquer avec un deuxième module externe 108 ou module de prédiction, qui est configuré pour effectuer des calculs de prédiction. Ce peut être un agent d'apprentissage automatique par exemple.

Une troisième interface E/S permet de coupler le module central NDT-MA à une interface utilisateur graphique 112 aussi désignée comme (NDT-GUI) pour afficher le jumeau numérique réseau pendant les différentes phases de sa construction et de sa mise à jour. La spécification de l'interface graphique du jumeau numérique réseau ne fait pas partie du périmètre de cette invention, seuls des mécanismes d'entrée/sortie vers et depuis une telle NDT-GUI sont décrits.

Comme il sera détaillé plus loin, la présente invention s'appuie sur de nouveaux mécanismes pour échanger des messages de supervision et de configuration entre un réseau physique (PTN) et son jumeau numérique (NDT).

Le NDT-MA est en charge de générer un NDT et de le mettre à jour, en procédant de manière incrémentale par partie ou groupe (« cluster » en anglais) du réseau physique. Chaque groupe est décrit par le NDT-MA à travers une structure de données appelée « descriptif ». Ce descriptif est rempli par le NDT-MA grâce à des échanges d'informations réseau avec les deux modules externes, i.e. le module de gestion réseau et le module de prédiction.

Avantageusement, il est proposé un nouveau formalisme pour représenter l'information réseau sous forme d'une structure en arborescence et hiérarchisée pour permettre la construction et la gestion du NDT.

Les modèles existants de structures de représentation de l'information réseau, comme par exemple le modèle SMI (« Structure of Management Information » en anglais), offrent très peu de possibilités de représenter des informations exhaustives relatives aux liens réseau, comme des données statistiques associées à une interface réseau, un débit d'entrée/sortie, un rapport signal/bruit (S/N), la puissance d'un signal reçu (RSSI), etc. Pour avoir des données statistiques au niveau d'un lien réseau (par exemple, un type de flux (A/V, TPC/UDP, etc.), un taux d'occupation du lien, etc.), il faudrait alors utiliser des outils logiciels dédiés. Ce qui complexifie la gestion du réseau, et de fait complexifie la gestion d'un jumeau numérique réseau.

A la différence de l'art antérieur, dans la présente invention il n'y a pas besoin d'outils additionnels. Il est proposé une nouvelle représentation de l'information réseau, qui couvre à la fois les informations inhérentes à un équipement réseau et les informations liées au trafic sur un lien réseau.

Les informations inhérentes à un équipement réseau visent par exemple les protocoles utilisés et leurs configurations, les ressources (CPU, mémoire, voltage, etc.), les informations sur les interfaces réseau (adresse PHY/MAC/IP, bande passante, ports ouverts, débit E/S, S/N, RSSI, etc.).

Les informations liées au trafic sur un lien réseau visent par exemple un type de flux (A/V, TPC/UDP, etc.), un taux d'occupation du lien, etc.

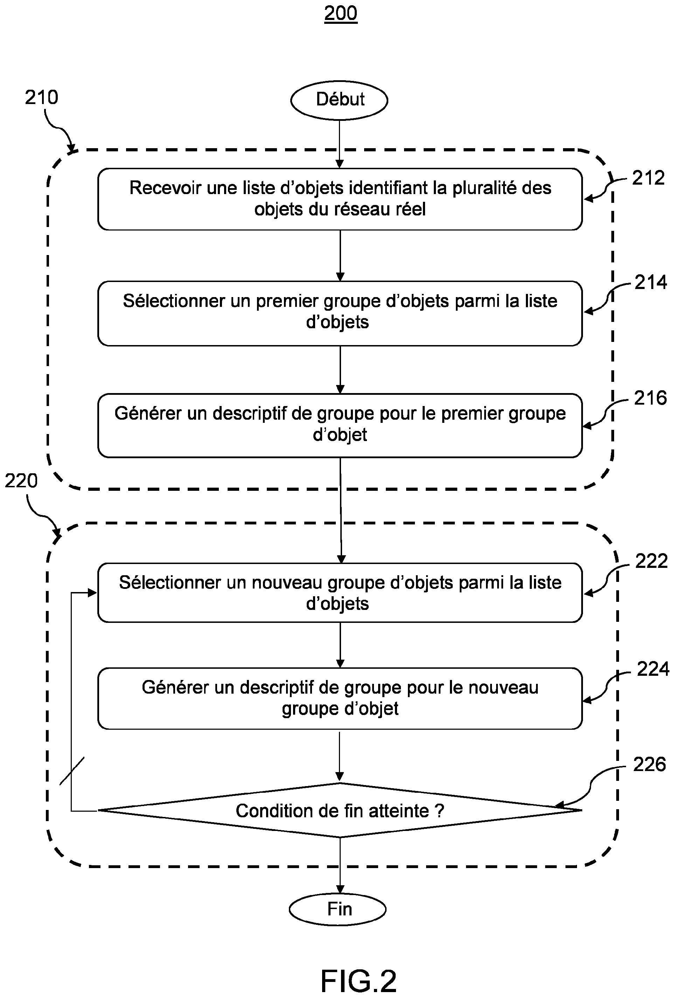

La figure 2 montre un logigramme des étapes du procédé de construction d'un jumeau numérique réseau dans un mode de réalisation.

Généralement, le procédé 200 de construction d'un jumeau numérique réseau d'un réseau de communication physique qui est composé d'une pluralité d'équipements et de liens entre les équipements et qui consomme des ressources, comprenant deux phases.

Une première phase 210 ou phase d'initialisation d'un jumeau numérique réseau, et une seconde phase 220 ou phase de construction incrémentale du jumeau numérique réseau.

Le procédé 200 est initié lorsque l'agent gestionnaire du jumeau numérique du réseau (NDT-MA) estime que la gestion fine du réseau de communication peut présenter un problème de passage à l'échelle.

Pour ce faire le NDT-MA peut utiliser des données/statistiques réseau telles que le nombre total des noeuds réseau gérés, le nombre total des connexions réseau, le volume moyen du trafic dans le réseau, le nombre de terminaux, nombre d'utilisateurs finaux, les propres ressources de calcul dont dispose le NDT-MA, etc. Ces données statistiques peuvent être collectées par les protocoles de gestion de réseau conventionnel SNMP, CMIP, LWM2M, CoMI, SDN ou de leurs mécanismes sous-jacents d'échanges de messages comme SNMP, CoAP, MQTT, XML, etc.

Dans une implémentation préférentielle, le NDT-MA initie le procédé 200 en se basant sur un seuil associé à un ou plusieurs types de données/statistiques réseau collectées. Ainsi par exemple, le seuil pour l'initiation du procédé peut être associé au nombre total de noeuds réseau gérés.

Revenant à la figure 2, durant la phase d'initialisation 210, le procédé comprend une étape 212 consistant à recevoir une liste d'objets désignant la pluralité des équipements et des liens du réseau physique.

Dans un mode de réalisation, chaque objet de la liste est un identifiant désignant un équipement réseau ou un lien réseau.

Le procédé poursuit par une étape 214 consistant à sélectionner un premier groupe d'objets parmi la liste d'objets.

Un groupe d'objets qui est sélectionné regroupe une liste d'équipements du réseau et des liens entre ces équipements.

Dans une étape suivante 216, le procédé permet de générer un descriptif de groupe pour le premier groupe d'objets.

Avantageusement, un descriptif de groupe selon l'invention, constitue pour le jumeau numérique réseau, une représentation d'un groupe d'objets sous la forme d'une structure arborescente. Un descriptif de groupe qui est créé comprend des informations relatives aux équipements et aux liens de ce groupe d'objets, et des informations relatives à des ressources associées à chaque objet de ce groupe d'objets.

Après la phase 210 d'initialisation, le procédé 200 entre dans la phase 220 de construction incrémentale du jumeau numérique réseau qui comprend des étapes successives (222, 224) qui sont itérées (226) jusqu'à l'atteindre d'une condition de fin.

A chaque itération, le procédé permet une étape 222 pour sélectionner un nouveau groupe d'objets parmi la liste d'objets, suivie d'une étape 224 pour générer un descriptif de groupe pour le nouveau groupe d'objets.

Le nouveau groupe d'objets sélectionné est tel que le descriptif de groupe pour ce nouveau groupe d'objets est différent de chaque descriptif de groupe qui a été généré aux étapes précédentes de l'itération y compris du descriptif de groupe généré pour le premier groupe d'objets.

Dans un mode de réalisation, les étapes de construction incrémentale peuvent être poursuivies pour aboutir au traitement intégral du réseau physique et produire un jumeau numérique réseau qui représente le réseau physique complet.

Dans une variante de réalisation, il peut être défini une condition de fin qui limite l'exécution de la procédure incrémentale à un nombre limité d'itérations sans aller jusqu'au traitement du réseau complet.

La figure 3 est une illustration simplifiée d'une structure arborescente pour représenter l'information réseau par des groupes d'objets, selon l'invention.

Pour faciliter l'identification d'une entité du réseau au niveau du NDT, comme par exemple identifier un routeur, une interface, un réseau, un lien réseau, etc., un identifiant réseau suit une structure hiérarchique de type Groupe-Objet-Ressource, qui va identifier l'appartenance à un groupe (Groupe 1, Groupe i, Groupe n), puis identifier une description du ou des objets du groupe (Objet 1.1 à Objet 1.n, Objet i.1 à Objet i.n, Objet N.1 à Objet N.n), puis identifier une description de la ou des ressources associées aux objets du groupe (Ressources de l'objet 1.1 à Ressources l'objet 1.n, Ressource de l'objet i.1 à Ressources de l'objet i.n, Ressources de l'objet N.1 à Ressources de l'objet N.n).

Comme illustré sur la figure 3 avec l'exemple du groupe 302-1, un groupe peut être composé d'un ou plusieurs objets réseau 304-1.1 à 304-1.n, chaque objet identifiant une entité du réseau (un équipement ou un lien réseau). Chaque objet du groupe 302-1peut avoir une ou plusieurs ressources associées 306-1.1 à 306-1.n (par exemple, des caractéristiques de CPU, des caractéristiques d'une interface réseau d'un appareil, etc.).

Comme déjà indiqué, un objet réseau (ou entité réseau) peut être de deux types : soit désigner un équipement réseau, soit désigner un lien réseau.

Une ressource réseau représente tout type d'information pouvant caractériser un objet réseau. Ainsi par exemple, pour un équipement réseau, une ressource peut être une adresse IP, une utilisation de CPU, une localisation de l'équipement, des protocoles de communication utilisés et leurs configurations, des flux de données, etc.

Pour un lien réseau, une ressource peut être par exemple une technologie de transmission comme des protocoles PHY / MAC et des paramètres associés. Une ressource peut aussi désigner la bande passante disponible, un nombre de flux de trafic, un type de trafic (ex. TCP, UDP, etc.), etc...

L'homme du métier comprend que les exemples donnés ne sont pas limitatifs, et que les objets ou entités de réseau sont tout type d'équipements et de liens de communication entre équipements, et que les ressources réseau sont toutes les données disponibles pouvant caractériser ou être associées à un équipement ou à un lien.

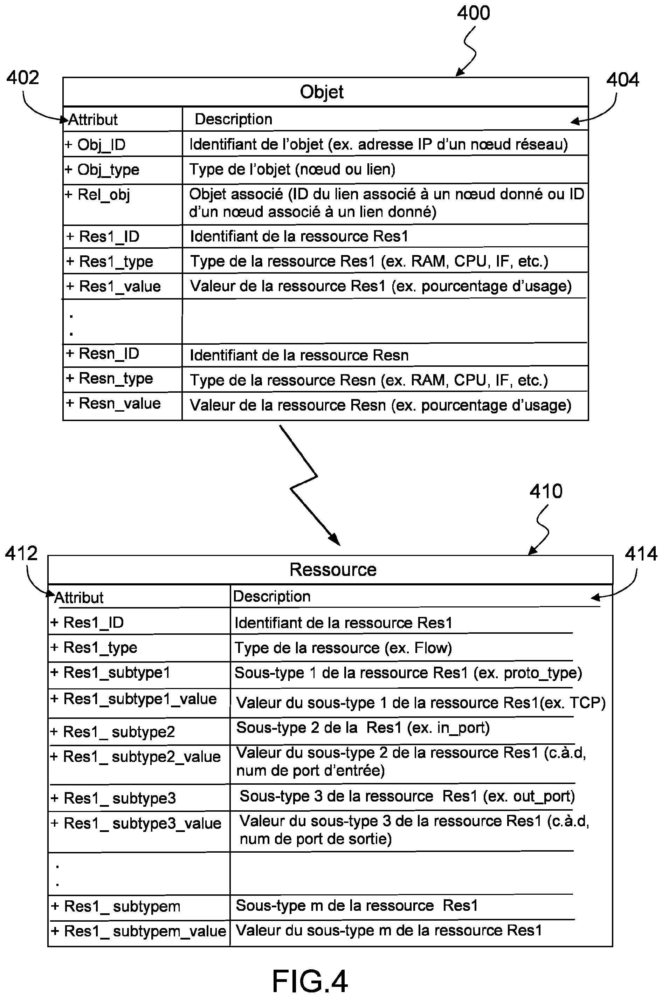

La figure 4 est un exemple pour illustrer un descriptif de groupe d'objets pour un ensemble d'objets et de ressources associées, pour construire un jumeau numérique réseau selon les principes de l'invention.

Avantageusement, pour faciliter une supervision et une configuration aussi bien fine que sommaire de l'information réseau au niveau d'un jumeau numérique, l'information réseau est représentée sous la forme d'une structure arborescente et hiérarchisée.

La structure générale permet de définir chaque objet dans un groupe d'objets et les ressources associées à chaque objet.

Une première structure 400 permet de définir les informations relatives aux objets réseau. Dans un mode de réalisation, la structure des objets est un tableau ayant une première colonne Attribut 402 définissant des attributs pour des objets et pour des ressources associées (par exemple des attributs d'identifiant, de type, de valeur, de relation entre objets), et ayant une deuxième colonne Description 404 contenant des informations relatives à chaque attribut correspondant.

Ainsi, dans l'exemple de la structure 400, un attribut « Obj_ID » peut être assigné comme identifiant un objet, et la description correspondante peut être une adresse IP si cet objet est un noeud du réseau. Un attribut « Obj_Type » peut être assigné comme identifiant le type de l'objet, et la description correspondante peut être une information « noeud » ou « lien » selon la nature de l'objet dans le réseau physique.

De manière similaire, la colonne Attribut 402 définit différents attributs d'identifiant, de type, de valeur pour chaque ressource associée à l'objet, avec une description correspondante, comme par exemple « RAM, CPU, IF » pour décrire un type de ressource, ou « pourcentage/taux d'usage » pour décrire une valeur de la ressource.

Il est à noter qu'une ressource peut être de différents types qui peuvent prendre plusieurs valeurs possibles. Aussi, la structure des objets 400 peut être associée à une deuxième structure 410 qui permet de définir pour chaque ressource enregistrée dans la table des objets 400, des attributs dans une colonne Attribut de Ressource 412 et fournir une description correspondante dans une colonne Description de Ressource 414.

Le type d'une ressource dépend cependant du type d'objet associé. Par exemple, si l'objet est un noeud, une ressource associée peut être une mémoire volatile (RAM), une CPU, une interface réseau ('IF'), etc. Si l'objet est un lien, une ressource associée peut être de type taux de perte de paquets ('pkt_loss_ratio'), ou nombre de flux ('nb_flows'), ou type de flux (TCP, UDP, etc.).

Par ailleurs, une ressource d'un certain type peut avoir plusieurs sous-types. Par exemple, une ressource de type flux ('flow') peut avoir des sous-types liés à un type de protocole ('proto_type'), à un numéro de port d'entrée ('in_port'), à un numéro de port de sortie ('out_port'), etc.

Ainsi de manière généralisée, pour un groupe regroupant un ensemble d'objets, un descriptif du groupe peut être une union des différents objets, représentés à travers leur descriptif. Chacun des objets peut avoir une ou plusieurs ressources, et chaque ressource d'un type donné, peut elle-même avoir zéro ou plusieurs sous-types.

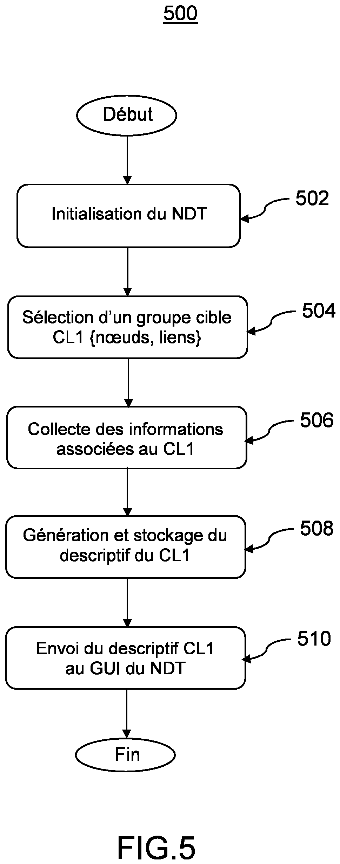

La figure 5 est un logigramme détaillant les étapes 210 de la figure 2 de la phase d'initialisation d'un jumeau numérique réseau, selon un mode de réalisation de l'invention.

Dans la phase initiale de construction incrémentale par groupes, le procédé permet de découvrir l'ensemble des objets réseau (i.e. l'ensemble des équipements et des liens du réseau physique). Le NDT est alors initialisé avec la liste de tous les objets du réseau physique. Comme mentionné précédemment, l'objet peut être de deux types différents : équipement réseau ou lien réseau.

La liste d'objets est collectée par le gestionnaire du jumeau numérique réseau NDT-MA en envoyant dans une étape 502 une requête de type 'Request_listobjets ( )' à un serveur de gestion réseau disponible dans le réseau physique (par exemple, SNMP, CMIP, LWM2M, CoMI, SDN, etc.).

Dans une implémentation préférée, le NDT-MA envoie la requête à un serveur de gestion réseau conventionnel qui est capable de l'interpréter et de la convertir en des requêtes réseau classiques à travers le mécanisme sous-jacent d'échange des messages de gestion réseau (par exemple, SNMP, CoAP, MQTT, XML, etc.).

La requête est envoyée via une interface de communication du NDT-MA dédiée aux échanges de messages avec le module de gestion conventionnelle du réseau de communication.

Le serveur de gestion renvoie une liste d'objets au gestionnaire du jumeau numérique réseau. Dans un mode de réalisation préféré, la liste des objets ne contient que les objets découverts et ne contient pas d'information relative aux ressources associées aux objets.

Dans un mode de réalisation, la liste des objets peut prendre la forme suivante : List_objets= {{N1, N2, Nm}, {L13, L34, L3m}}, où 'Ni' est un identifiant du noeud i (i.e. équipement réseau i), et où 'Lij' est un identifiant du lien réseau (i.e. lien de communication) entre un noeud i et un noeud j.

Une fois la liste des objets reçue par le NDT-MA, le procédé permet dans une étape suivante 5041 de sélectionner un groupe initial CL1, ou « cluster » initial.

Dans la suite de la description, le terme 'cluster' peut être utilisé pour désigner un 'groupe'.

Ainsi, le choix d'un cluster, que ce soit le cluster initial (CL1) dans la phase d'initialisation ou un cluster intermédiaire lors des phases itératives, peut être fait selon différentes options alternatives ou combinées.

Dans une première option de réalisation, le procédé permet que la détermination d'un cluster se base sur la survenue d'évènements récents dans le réseau physique. De tels évènements, peuvent, par exemple, avoir été rapportés par le serveur de gestion conventionnel au NDT-MA sous forme de logs (dernières anomalies de fonctionnement (défaillances matérielles/logicielles, paramètres réseaux anormalement bas/haut, etc.), dernières vulnérabilités avérées ou potentielles, dernières anomalies de sécurité détectées (de noeuds telles qu'observées par un système HIDS (« Host Intrusion Détection System » en anglais) ou de liens telles qu'observées par un système NIDS (« Network Intrusion Détection System » en anglais)), dernières mises à jours logicielles des noeuds, dernières reconfigurations des noeuds, dernières opérations de maintenance/ réparation/ remplacement des noeuds, etc.).

Dans une deuxième option de réalisation, le procédé permet que la détermination d'un cluster se base sur une fonction pseudo-aléatoire permettant de sélectionner un sous-ensemble d'objets dans la liste des objets. Dans ce cas précis, le choix d'un objet (par exemple un noeud) peut par exemple se faire de manière pseudo-aléatoire sur un intervalle [ObjectIDmin, ObjectIDmax] (en utilisant, par exemple, la fonction rand () de la librairie du langage C), où 'ObjectIDmin' et 'ObjectIDmax' sont respectivement les identifiants min et max de l'ensemble des objets dans la liste des objets. Les valeurs 'ObjectIDmin' et 'ObjectIDmax' peuvent également être extraites d'un sous-ensemble d'objets de la liste des objets (par exemple, les noeuds uniquement, les objets non-encore sélectionnés pour faire partie d'un cluster, etc.).

Dans une autre option de réalisation, le procédé permet que la détermination d'un cluster se base sur une « bonne taille » du cluster. Dans ce cas, le NDT-MA utilise la première ou la deuxième option, ou utilise une combinaison des deux, tout en vérifiant que les opérations engendrées ou devant être engendrées par le cluster en question ne dépassent pas les ressources disponibles du NDT-MA et de son voisinage (par exemple la bande passante). La détermination de la « bonne taille » d'un cluster peut s'effectuer en fonction des ressources dont le NDT-MA dispose (calcul, stockage, etc.), ou en fonction de la quantité de données que le NDT-MA devra gérer à chaque itération (information obtenue par interrogation du serveur de gestion de réseau) et du temps dont il disposera pour traiter ces données. Ce temps est dépendant de la fréquence des itérations.

Dans une variante d'implémentation, la sélection du cluster peut être effectuée par un module extérieur et non pas par le NDT-MA, via par exemple l'interface graphique du NDT, par exemple en faisant une sélection via la souris. Le cluster est alors communiqué par le module extérieur au gestionnaire du jumeau numérique NDT-MA via une interface dédiée.

Dans une autre variante d'implémentation, les clusters (initial ou ultérieurs) peuvent être définis ou mis à jour comme résultats d'un algorithme d'apprentissage automatique, par exemple de type non-supervisé, auto-supervisé (de type clustering), supervisé, ou semi-supervisé (de type classification).

Revenant à la figure 5, une fois un groupe d'objets sélectionné le procédé permet dans une étape suivante 506 de procéder à une synchronisation du cluster choisi, avec son correspondant dans le réseau physique.

Pour ce faire, le procédé permet que le NDT-MA génère une requête de descriptif pour le cluster initial vers le serveur de gestion réseau via son interface de communication dédiée. L'objectif de la requête de descriptif est de découvrir les ressources potentielles de chaque objet du cluster pour laquelle elle est demandée.

Dans un mode de réalisation, une requête de descriptif 'Request_desc( )' peut avoir le format général suivant :
Request_desc ({ObjectID, Expression}, {ObjectID, Expression}), où 'ObjectID' est l'identifiant d'un objet. Les valeurs du champ 'Expression' peuvent inclure : une valeur égale à 'ALL_RES' pour obtenir toutes les ressources de l'objet, ou une valeur égale à 'NONE' pour ignorer les ressources de l'objet.

L'homme du métier pourra adapter toute autre expression complexe, comme par exemple, définir une requête pour des ressources satisfaisant une certaine condition (pour une ressource donnée, il peut s'agir d'un seuil de valeurs ou d'un intervalle de valeurs). La forme exacte d'une telle expression complexe est en dehors du périmètre de l'invention.

A titre d'exemple, une telle requête de descriptif peut être :
Request_desc ({N1,ALL_RES}, {N2, ALL_RES},{L13,ALL_RES} ).

Lorsque le serveur de gestion réseau collecte et envoie au NDT-MA les informations réseau associées à la requête de descriptif, (i.e. une liste de ressources par objet « list_resources »), le procédé dans une étape suivante 508 permet au NDT-MA de remplir (i.e. le NDT-MA est configuré pour remplir) le descriptif du cluster CL1 avec les informations reçues du serveur de gestion réseau.

Une fois le descriptif du cluster CL1 généré, le procédé permet dans une étape suivante 510 de partager les informations via l'interface graphique 112 du NDT, pour affichage et pour permettre à un utilisateur de visualiser la construction du jumeau numérique réseau.

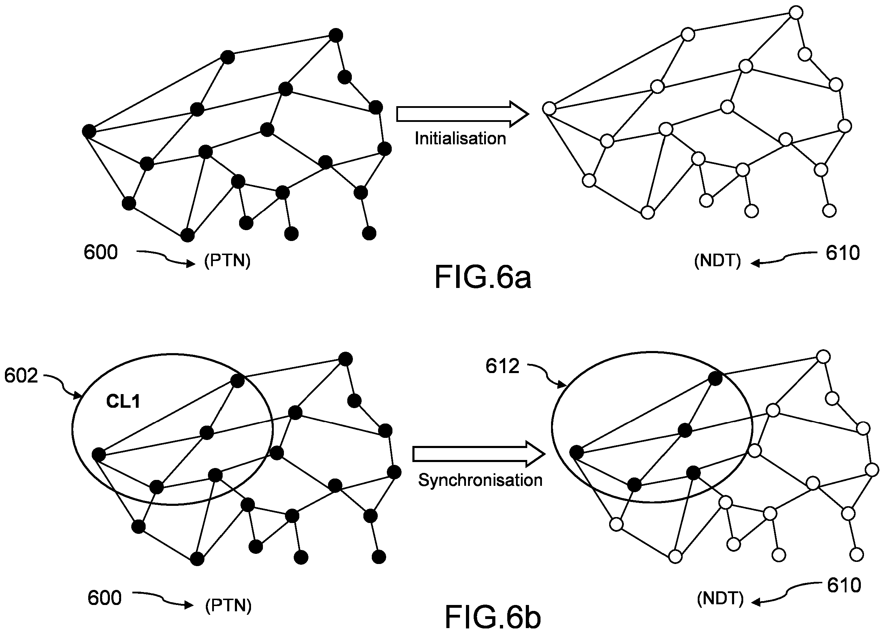

Les figures 6a et 6b sont une représentation de la phase d'initialisation d'une construction incrémentale d'un jumeau numérique réseau 610 d'un réseau physique 600, selon les principes de l'invention. La figure 6a illustre la découverte des objets du réseau physique et la figure 6b illustre la sélection d'un groupe ou cluster initial CL1 dans le réseau physique et la synchronisation du cluster initial dans le jumeau numérique réseau.

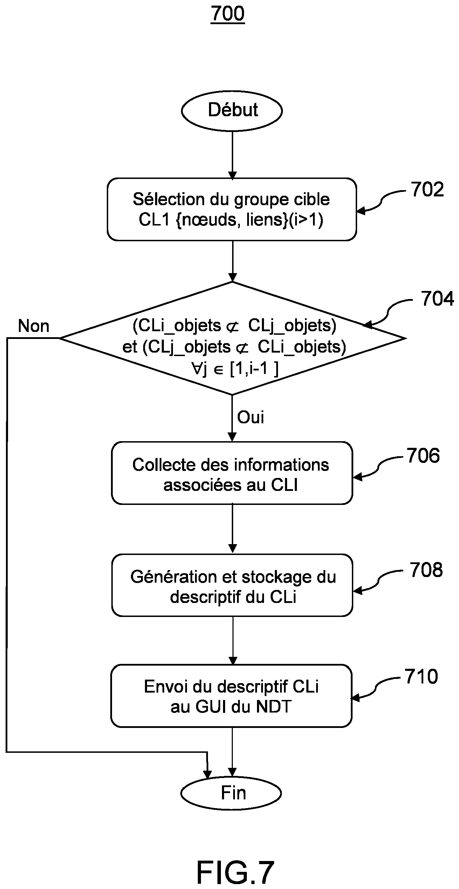

La figure 7 est un logigramme détaillant les étapes 220 de la figure 2 de la phase de construction incrémentale d'un jumeau numérique réseau selon un mode de réalisation de l'invention.

La phase de construction par groupement incrémental peut contenir une ou plusieurs phases de construction intermédiaire avant la fin de la construction d'un jumeau numérique réseau, qui peut être tout ou partie d'un réseau physique.

Chaque phase intermédiaire 700 débute par une étape 702 permettant de sélectionner un nouveau cluster CLn (n>1) à partir de la liste des objets.

Dans une étape suivante 704, le procédé permet de vérifier qu'un nouveau cluster qui est sélectionné vérifie la condition que son descriptif 'desc_CLn' est différent du descriptif de tout cluster précédemment sélectionné par la procédure de construction en cours, comprenant la descriptif du cluster initial.

Ainsi, il est vérifié selon l'équation suivante que :

$$desc\_CLn \neq desc\_CLi, \ 1 \leq i < n.$$

Pour s'assurer d'une telle inégalité, le procédé permet au NTD-MA dans une étape suivante 704 de faire une comparaison entre l'ensemble des objets associés au cluster CLn et l'ensemble des objets associés aux clusters CLi, $1 \leq i < n$.

L'ensemble des objets du nouveau cluster CLn et l'ensemble des objets du cluster CLi peuvent présenter 2 cas de figure : soit ils sont complètement disjoints, soit ils partagent un sous-ensemble d'objets communs (noeuds et/ou liens).

Par ailleurs, il est à noter qu'il est exclu d'avoir l'ensemble des objets d'un cluster CLi inclus dans l'ensemble des objets du nouveau cluster CLn et vice versa. Ceci permet à la procédure de construction incrémentale de converger (vers un NDT du réseau complet), tout en préservant l'avantage du passage à l'échelle.

Si la condition d'inégalité n'est pas vérifiée, le procédé se termine (branche Non).

Si la condition d'inégalité est vérifiée (branche oui), le procédé se poursuit par une étape 706 de synchronisation du cluster sélectionné, avec son correspondant dans le réseau physique.

Pour ce faire, le procédé permet que le NTD-MA génère une requête de descriptif pour le cluster sélectionné vers le serveur de gestion réseau via son interface de communication dédiée. L'objectif de la requête de descriptif est de découvrir les ressources potentielles de chaque objet du cluster sélectionné pour laquelle elle est demandée.

Dans une étape suivante 708, le procédé permet au gestionnaire du jumeau numérique réseau NDT-MA de remplir le descriptif du nouveau cluster avec les informations reçues du serveur de gestion réseau.

Une fois le descriptif du nouveau cluster généré, le procédé permet dans une étape suivante 710 de partager les informations via l'interface graphique 112 du NDT, pour affichage et pour permettre à un utilisateur de visualiser la construction en cours du jumeau numérique réseau.

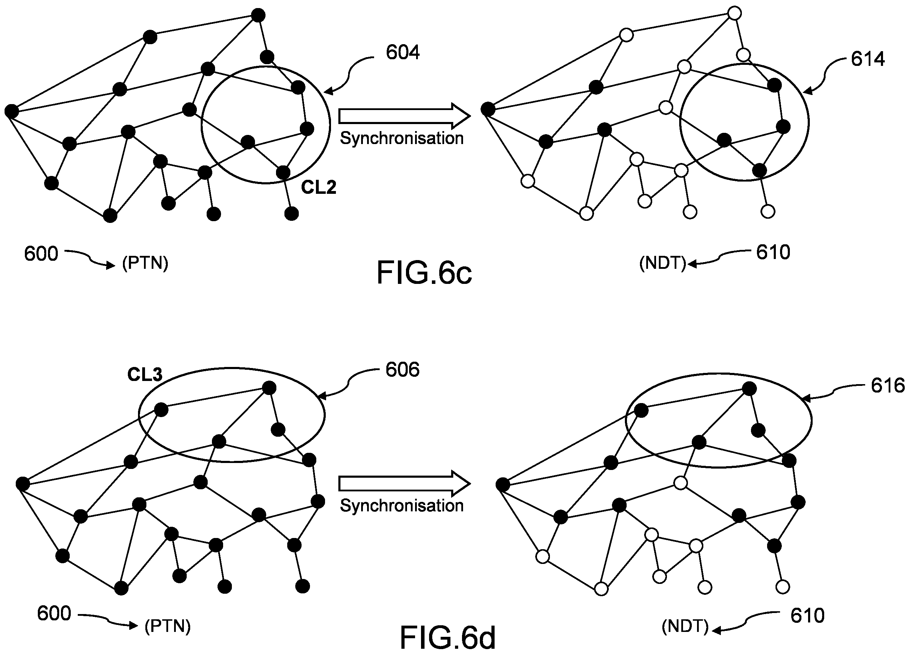

Les figures 6c et 6d sont une représentation d'une construction incrémentale d'un jumeau numérique réseau d'un réseau physique, selon les principes de l'invention, lors de phases intermédiaires, qui suivent la phase initiale représentée sur les figures 6a et 6b. Ainsi, sur la figure 6c, il est illustré la sélection et la synchronisation d'un nouveau cluster CL2 dont le descriptif est différent du cluster initial CL1, et sur la figure 6d, il est illustré la sélection et la synchronisation d'un nouveau cluster CL3 dont le descriptif est différent du cluster initial CL1 et du descriptif du cluster précédent CL2.

Pour des raisons d'illustration, les objets (noeuds et liens) réseau du jumeau numérique laissé en grisé ne sont pas concernés par la synchronisation.

Dans un mode de réalisation, afin de s'assurer que tous les clusters CL1 à CLn au niveau du NDT sont à jour en termes de descriptif (c'est-à-dire afin d'assurer une cohérence temporelle entre les différents clusters du NDT à chaque instant), le procédé permet au cours de chaque phase intermédiaire générant un nouveau cluster CLn (n>1), de procéder à une prédiction du dernier descriptif de tous les clusters précédents CLi ($1 \leq i < n$).

Ainsi, par exemple, au cours de l'étape 706 d'envoi d'une requête de descriptif, il est possible au module externe de prédiction 110 de faire un calcul de prédiction pour le nouveau cluster en cours. Il est à noter qu'une description détaillée de cette prédiction n'est pas dans le périmètre de l'invention, et divers modèles prédictifs communément utilisés pour caractériser les réseaux de communication peuvent être exploités dans le cadre d'une solution NDT intégrées et incluant l'approche de clustering incrémental de la présente invention. Parmi lesdits modèles prédictifs, on peut citer les modèles d'apprentissage automatiques, tels que les modèles GNN (« Graph Neural Networks »), DRL (« Deep Reinforcement Learning »), LSTM (« Long Short-Term Memory »), etc.

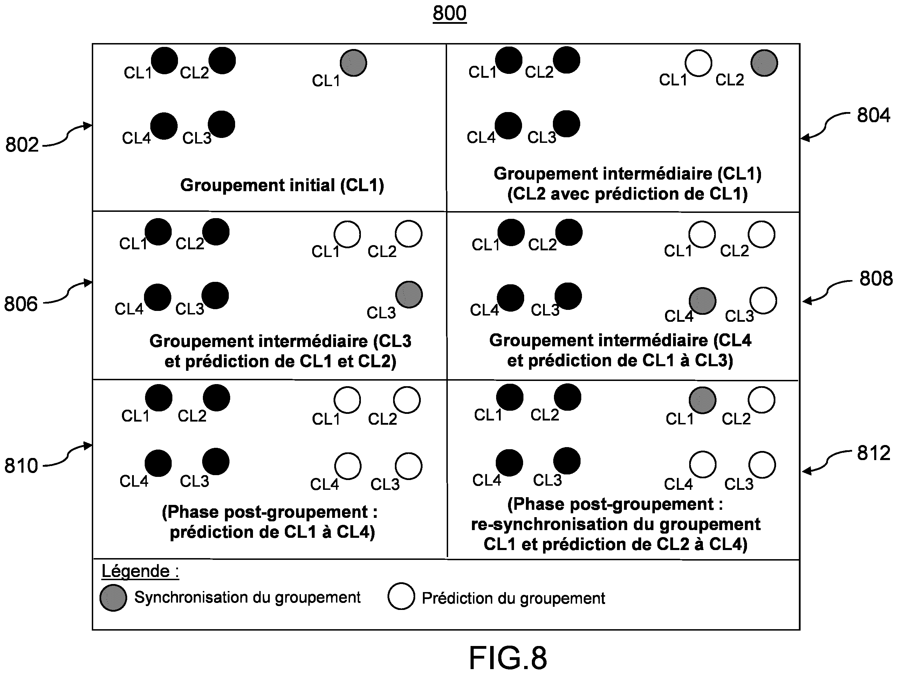

La figure 8 illustre schématiquement une construction incrémentale d'un jumeau numérique réseau pour un réseau physique ayant quatre groupes d'objets CL1 à CL4, selon un mode de réalisation avec prédiction de descriptif de groupes d'objets. Ainsi, dans la phase initiale 802, il est construit et synchronisé un cluster initial CL1. Dans une première phase intermédiaire 804, il est construit et synchronisé un nouveau cluster CL2, et il est effectué une prédiction du cluster initial CL1. Puis au cours de la deuxième phase intermédiaire 806, il est construit et synchronisé un nouveau cluster CL3, et il est effectué une prédiction des clusters précédents CL1 et CL2. Ce procédé se répète de manière analogue pour la troisième et dernière phase intermédiaire 808 (i.e. une condition de fin est atteinte), où il est construit et synchronisé un nouveau cluster CL4, et il est effectué une prédiction des clusters précédents CL1, CL2 et CL3.

La figure 8 illustre deux phases ultérieures 810 et 812, consistant pour la phase 810 à une prédiction du dernier cluster CL4, et consistant pour la phase 812 à une demande spécifique de resynchronisation d'un cluster, le cluster initial CL1, associée à un calcul de prédiction des autres clusters CL2 à CL4 du jumeau numérique réseau NDT.

La phase de resynchronisation est une phase transverse par rapport aux phases initiale et intermédiaires du clustering incrémental. Il s'agit ici d'une synchronisation ou d'une resynchronisation entre un cluster dans le réseau physique (PTN) et son équivalent dans le réseau NDT.

La synchronisation débute par une sélection dynamique d'un cluster cible afin de générer à travers la phase de synchronisation, dynamiquement sa contrepartie dans le NDT.

Dans un mode de réalisation, la sélection dynamique d'un cluster cible dans le PTN peut être dictée par des évènements constatés (tels que des pannes réseau), par des besoins applicatifs, par des besoins utilisateurs, etc.

La phase de synchronisation vise à collecter la totalité des informations sollicitées par le NDT-MA. Cette phase de synchronisation peut être assurée par divers protocoles de découvertes des ressources réseau, notamment les protocoles de gestion de réseau conventionnel SNMP, CMIP, LWM2M, CoMI, SDN ou de leurs mécanismes sous-jacents d'échanges de messages comme SNMP, CoAP, MQTT, XML, etc.

Pour un cluster donné, la fréquence de resynchronisation peut dépendre de divers facteurs, comme le dynamisme de la topologie réseau (fréquence du changement des routes, apparition de nouveaux noeuds dans le réseau, disparitions de noeuds du réseau, etc.) ou le dynamisme du modèle du trafic réseau (nombre de flux par lien, taux d'occupation de la bande passante par lien, etc.). D'autres facteurs peuvent aussi être considérés, comme la gigue (variation de la latence) de bout-en-bout.

Ainsi, par exemple, si un des facteurs listés ci-dessus dépasse un seuil donné, le gestionnaire NDT-MA peut décider d'augmenter la fréquence de resynchronisation du cluster. Dans le cas contraire (i.e. le facteur diminue en dessous d'un seuil prédéfini), le NDT-MA peut décider de diminuer la fréquence de resynchronisation du cluster.

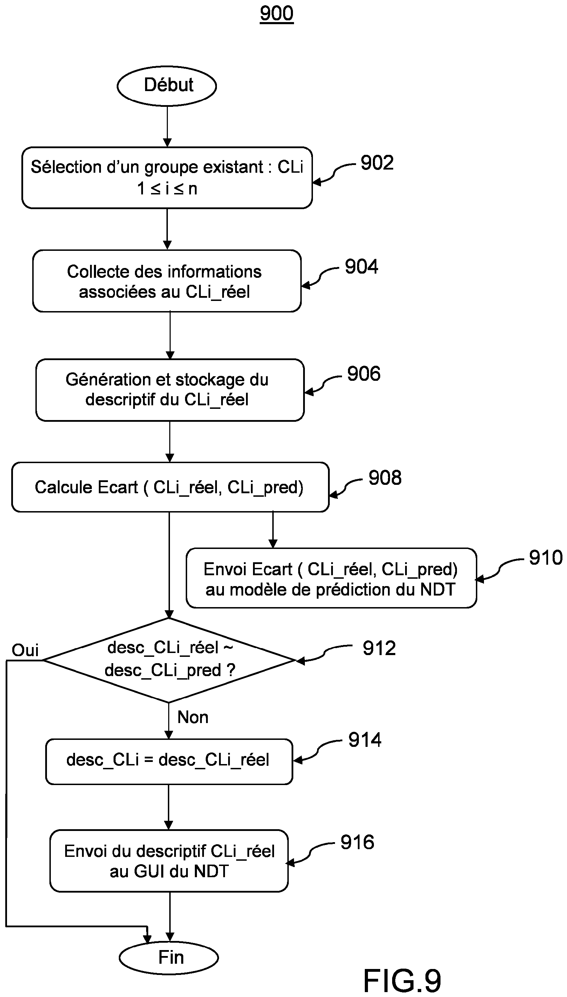

La figure 9 est un logigramme illustrant un procédé 900 de resynchronisation d'un groupe d'objets selon un mode de réalisation de l'invention.

Comme indiqué, le NDT-MA peut à tout moment solliciter un nouveau descriptif d'un cluster CLi donné, pour lequel un descriptif existe déjà dans le NDT. Ainsi, le procédé permet la sélection d'un cluster (étape 902), l'envoi d'une requête de descriptif (étape 904) et la génération d'un descriptif (étape 906). Les étapes 902 à 906 sont équivalentes aux étapes 702 à 706.

Dans une étape suivante 908, le procédé permet au NDT-MA de comparer le descriptif reçu du CLi pour le réseau physique avec son équivalent prédit existant dans le NDT, puis de déterminer (étape 910) s'il existe un écart.

Si le NDT-MA constate un écart entre les deux descriptifs (branche non), le procédé permet de procéder à une resynchronisation du cluster concerné sur le NDT, en mettant à jour son descriptif (étape 916).

Une fois le descriptif mis à jour, le procédé permet dans une étape suivante 918 de partager les informations via l'interface graphique 112 du NDT, pour affichage et pour permettre à un utilisateur de visualiser la construction en cours du jumeau numérique réseau.

Si le NDT-MA constate qu'il n'y a pas d'écart entre les deux descriptifs (branche oui), le procédé se termine.

Le procédé permet aussi d'envoyer (étape 914) une notification au module de prédiction (par exemple un module d'apprentissage automatique) pour que ce dernier prenne en compte l'écart constaté. Le module d'apprentissage automatique peut alors par exemple mettre en oeuvre des approches d'apprentissage par renforcement de manière à améliorer ses futures prédictions grâce à ce «feedback».

L'écart entre un descriptif d'un cluster prédit CLi_pred (desc_CLi_pred) et un descriptif du cluster réel CLi_reel (desc_CLi_reel), peut se mesurer d'abord à l'échelle, au niveau des objets du cluster, puis au niveau des ressources de chaque objet. Dans ce cas précis, la mesure de l'écart considère l'écart dans la valeur d'une ressource donnée entre le CLi_pred et le CLi_reel ou alors par la différence entre l'ensemble des ressources présentes dans le CLi_pred et l'ensemble des ressources présentes dans le CLi_reel.

Dans un mode de réalisation, l'écart est représenté par un seuil de différence. Ainsi, l'écart entre les objets du descriptif prédit desc_CLi_pred et du descriptif réel desc_CLi_reel peut être le seuil du nombre d'objets différents, sinon manquants, entre les deux clusters.

L'écart au niveau des ressources d'un objet donné, peut représenter un seuil du nombre de ressources différentes ou manquantes en tenant compte des deux clusters réel et prédit. Dans ce cas précis, l'écart au niveau des ressources peut aussi être formulé en termes de seuil de différence dans la valeur d'une ressource d'un objet donné existant dans les deux clusters.

Dans une variante de réalisation, l'écart entre un descriptif de cluster prédit CLi_pred et un descriptif de cluster réel CLi_reel peut se mesurer directement au niveau d'un objet sélectionné, présent à la fois dans le cluster prédit CLi_pred et le cluster réel CLi_reel. Dans ce cas précis, la mesure de l'écart considère l'écart dans la valeur d'une ressource donnée entre les deux clusters CLi_pred et le CLi_reel, ou alors considère la différence entre les ressources présentes dans le cluster prdit CLi_pred et celles présentes dans le cluster réel CLi-reel.

Dans une autre variante de réalisation, si l'écart entre le descriptif du cluster prédit CLi_pred (desc_CLi_pred) et le descriptif du cluster réel (desc_CLi_reel) lors d'une itération de la procédure incrémentale est trop grand (ou trop souvent grand sur une succession d'opérations de resynchronisation dudit cluster), le procédé permet au NDT-MA d'augmenter la fréquence de resynchronisation pour ce/ces cluster(s). Dans le cas contraire (ledit écart est négligeable), le NDT-MA peut décider de réduire la fréquence de resynchronisation pour le(s) cluster(s) concerné(s), ce qui permet, au NDT-MA, dans ce cas précis, de préserver les ressources réseau (notamment ceux du NDT-MA et de son voisinage).

**Opérations de zoom et dé-zoom**

Dans une variante de réalisation, le procédé de construction d'un jumeau numérique réseau selon l'invention, permet d'effectuer des opérations dites de zoom ou dé-zoom. Une opération de zoom ou dé-zoom est une opération transverse par rapport aux phases initiale et intermédiaires de la construction incrémentale, qui n'est pas systématiquement effectuée, mais ponctuellement en fonction de différentes raisons explicitées plus loin.

Une requête de zoom/dé-zoom pour un cluster donné, est formulée par le NDT-MA et est reçue par le module conventionnel de gestion réseau qui la traduit en des messages réseau sous-jacents, selon les mêmes principes décrits précédemment. Le serveur de gestion réseau répond au gestionnaire NDT-MA qui met à jour le descriptif du cluster concerné.

Une opération de zoom permet de faire une supervision/gestion ciblée des composants réseau (équipements/noeuds et liens).

Le besoin de faire une gestion ciblée peut être dicté par diverses raisons comme de faire un diagnostic, une recherche d'anomalies ou de pannes dans une partie du réseau de communication.

Par exemple, des ressources réseau (mémoire ou CPU du NDT-MA ou bande passante dans le voisinage du NDT-MA) viennent d'être libérées, ce qui permet alors de faire une analyse plus fine du réseau physique, et dès lors il y a besoin que plus d'informations soient remontées.

Une opération de dé-zoom peut être dictée par la volonté de libérer des ressources au niveau du NDT par exemple (libérer de la mémoire et CPU de la machine dans laquelle opère le NDT-MA), afin de générer ultérieurement des descriptifs de nouveaux clusters.

Pour un zoom, le NDT-MA est configuré pour décider de lancer une opération de zoom sur un cluster donné afin d'obtenir toutes les informations de niveau « ressources » associées à ce cluster. Une telle opération équivaut alors à une synchronisation ciblée d'une partie du cluster. Elle suppose que le descriptif actuel du cluster concerné se trouve dans deux états possibles : soit le cluster inclut des valeurs prédites des ressources ciblées par l'opération de zoom (par exemple dans le cas d'une opération intermédiaire du clustering incrémental), soit le cluster n'inclut pas les ressources ciblées par l'opération de zoom (par exemple, dans le cas où la dernière opération sur le cluster est une opération de dé-zoom).

Pour un dé-zoom, le NDT-MA est configuré pour lancer une opération de dé-zoom sur un cluster donné afin d'obtenir toutes les informations de niveau « objets » associées à ce cluster. Une telle opération suppose que le descriptif actuel du cluster concerné se trouve dans deux états possibles : soit le cluster inclut des valeurs prédites des ressources (par exemple dans le cas d'une opération intermédiaire du clustering incrémental), soit le cluster inclut des valeurs réelles des ressources (par exemple, dans le cas où la dernière opération sur le cluster est une opération de synchronisation dans le cadre d'un clustering incrémental).

L'homme du métier peut noter qu'après avoir subi une opération de dé-zoom, selon la variante préférentielle, un cluster CLi (1 $\leq i < n$), qui dans ce cas-là, contient des objets sans ressources, peut continuer à opérer une procédure de construction incrémentale du NDT-MA, selon le procédé de l'invention. En outre, le NDT-MA procède à la prédiction du dernier descriptif du cluster CLi (i.e. des objets sans les ressources associées) en utilisant un algorithme de prédiction du module de prédiction externe.

A titre d'exemple illustratif, des requêtes de "zoom" et de "dé-zoom" peuvent être selon les formats suivants :

- Requête zoom pour n objets d'un cluster identifié par ClusterID :
  *zoomin (ClusterID/ObjectIDI, ...ObjectIDn).*

- Requête dé-zoom d'un cluster identifié par Cluster ID :
  *zoomout (ClusterID).*

A titre d'exemple illustratif, des réponses à des requêtes de "zoom" et de "dé-zoom" peuvent être selon les formats suivants :

- Toutes les ressources (types, sous type(s) et valeurs) de tout objet concerné mentionné dans la requête zoom :
  *zoomin_ack desc_CluslterID (ObjectID1, ...ObjectIDn).*

- Tous les objets du cluster identifié par ClusterID :
  *zoomout_ack (ClusterID/ObjectID1,...ObjectIDn).*

Dans une variante de réalisation de dé-zoom, l'opération de dé-zoom sur un cluster donné CLi (*i ∈ [1,n], n* étant le nombre de clusters du réseau) consiste pour le gestionnaire NDT-MA à réduire la taille du cluster CLi en termes de nombres d'objets, et donc à avoir moins de noeuds et/ou moins de liens par rapport à sa version avant dé-zoom). Dans ce cas, le descriptif du cluster CLi n'est pas limité aux 'objets' (comme pour la variante préférentielle), mais il inclut également les ressources de chaque objet résultant du dé-zoom. Avantageusement, une telle réduction de la taille du cluster CLi permet de libérer des ressources au niveau du gestionnaire NDT-MA (CPU, mémoire, etc.) ainsi que dans son voisinage (i.e.de la bande passante), ce qui donne la possibilité de créer de nouveaux clusters.

Dans une variante de réalisation alternative, après avoir subi une opération de dé-zoom selon la variante préférentielle, un cluster CLi (i ∈ *[1,n], n* étant le nombre de clusters du réseau), qui dans ce cas-là, contient des objets sans ressources, peut continuer à opérer une procédure de construction incrémentale. En outre, le gestionnaire permet de procéder à la prédiction du dernier descriptif du cluster CLi (objets et ressources associées) en utilisant un algorithme de prédiction du module de prédiction externe.

Il a ainsi été décrit un procédé de construction d'un jumeau numérique réseau d'un réseau physique, et différentes variantes de réalisation. Le procédé décrit par son approche incrémentale de construction de clusters, permet de résoudre le problème technique du passage à l'échelle et de la synchronisation entre les deux réseaux réel et jumeau.

## Revendications

1. Un procédé (200) de construction d'un jumeau numérique réseau d'un réseau de communication physique, le réseau physique étant composé d'une pluralité d'équipements et de liens entre les équipements, et consommant des ressources, le procédé étant mis en oeuvre par ordinateur et comprenant :

   - une phase (210) d'initialisation d'un jumeau numérique réseau consistant à :

      - recevoir (212) une liste d'objets désignant la pluralité des équipements et des liens du réseau physique, chaque objet désignant un équipement réseau ou un lien réseau ;
      - sélectionner (214) un premier groupe d'objets parmi la liste d'objets, un groupe d'objets regroupant des équipements et des liens entre ces équipements ;
      - générer (216) un descriptif de groupe pour le premier groupe d'objet, un descriptif de groupe constituant une représentation pour le jumeau numérique réseau d'un groupe d'objets sous la forme d'une structure arborescente, et comprenant des informations relatives aux équipements et aux liens dudit groupe d'objets et des informations relatives à des ressources associées à chaque objet dudit groupe d'objets ; et

   - une phase (220) de construction incrémentale du jumeau numérique réseau comprenant des étapes successives consistant chacune à :

      - sélectionner (222) un nouveau groupe d'objets parmi la liste d'objets ; et
      - générer (224) un descriptif de groupe pour ledit nouveau groupe d'objets, tel que le descriptif de groupe dudit nouveau groupe d'objets est différent de chaque descriptif de groupe généré aux étapes précédentes ;

   les étapes successives étant itérées (226) jusqu'à l'atteindre d'une condition de fin.

2. Le procédé selon la revendication 1 dans lequel l'étape de recevoir une liste d'objets comprend une étape consistant à envoyer une requête à un serveur de gestion réseau du réseau physique, et à recevoir une liste comprenant un identifiant de chaque équipement réseau et un identifiant pour chaque lien réseau.

3. Le procédé selon la revendication 1 ou 2 dans lequel l'étape de sélectionner un premier groupe d'objets ou l'étape de sélectionner un nouveau groupe d'objets consiste à sélectionner un groupe d'objets en fonction d'évènements survenus dans le réseau physique.

4. Le procédé selon la revendication 1 ou 2 dans lequel l'étape de sélectionner un premier groupe d'objets ou l'étape de sélectionner un nouveau groupe d'objets consiste à sélectionner un groupe d'objets sur la base d'une fonction pseudo-aléatoire par exemple sur un intervalle.

5. Le procédé selon l'une quelconque des revendications précédentes dans lequel l'étape de sélectionner un premier groupe d'objets ou l'étape de sélectionner un nouveau groupe d'objets consiste à sélectionner un groupe d'objets en fonction d'une taille de groupe.

6. Le procédé selon l'une quelconque des revendications précédentes dans lequel l'étape de générer un descriptif de groupe pour un groupe d'objets consiste à envoyer une requête de descriptif à un serveur de gestion réseau du réseau physique, à recevoir une liste de ressources comprenant l'ensemble des ressources associées à chaque objet dudit groupe, et à générer une description structurée et hiérarchique des objets et des ressources associées à chaque objet dudit groupe d'objets.

7. Le procédé selon l'une quelconque des revendications précédentes dans lequel l'étape de générer un descriptif de groupe pour un groupe d'objets comprend de plus une étape consistant à unir différents objets, représentés à travers leur descriptif.

8. Le procédé selon l'une quelconque des revendications précédentes dans lequel l'étape de générer un descriptif de groupe pour un nouveau groupe d'objets, comprend une étape consistant à comparer l'ensemble des objets du nouveau groupe à l'ensemble des objets de tous les groupes générés précédemment.

9. Le procédé selon l'une quelconque des revendications précédentes comprenant de plus pour chaque étape successive une étape consistant à générer une prédiction pour le dernier descriptif de groupe d'objets généré.

10. Le procédé selon la revendication précédente comprenant de plus une étape consistant à comparer un descriptif de groupe d'objets prédit avec un descriptif des objets correspondants du réseau physique, et une étape consistant à resynchroniser les deux descriptifs en cas de différence.

11. Le procédé selon la revendication précédente dans lequel l'étape de comparaison consiste à déterminer des différences entre les objets d'un groupe d'objets prédit et un groupe d'objets du réseau physique, et à déterminer des différences entre les ressources présentes pour le groupe d'objets prédit et le groupe d'objets du réseau physique.

12. Le procédé selon la revendication 10 ou 11 dans lequel l'étape de resynchronisation met en oeuvre des protocoles de gestion de réseau de type SNMP, CoAP, MQTT, XML.

13. Le procédé selon l'une quelconque des revendications 10 à 12 dans lequel l'étape de resynchronisation est mise en oeuvre à une fréquence en fonction de la valeur de la différence.

14. Le procédé selon l'une quelconque des revendications précédentes comprenant de plus une étape de zoom sur un groupe d'objets permettant d'obtenir plus d'informations du réseau physique sur les ressources dudit groupe d'objets.

15. Le procédé selon l'une quelconque des revendications précédentes comprenant de plus une étape de dé-zoom sur un groupe d'objets permettant d'd'obtenir moins d'informations du réseau physique sur les ressources par objet dudit groupe d'objets.

16. Le procédé selon la revendication précédente dans lequel l'étape de dé-zoom comprend une étape consistant à réduire le nombre d'objets d'un groupe d'objets et à générer un nouveau descriptif d'objets.

17. Le procédé selon l'une quelconque des revendications précédentes dans les étapes successives sont itérées jusqu'à l'atteinte d'une représentation du réseau physique par un jumeau numérique réseau.

18. Un produit programme d'ordinateur, ledit programme d'ordinateur comprenant des instructions de code permettant d'effectuer les étapes du procédé selon l'une quelconque des revendications 1 à 17, lorsque ledit programme est exécuté sur un ordinateur.

19. Dispositif de construction d'un jumeau numérique réseau d'un réseau de communication physique, le réseau physique étant composé d'une pluralité d'équipements et de liens entre les équipements, et consommant des ressources, le dispositif comprenant des moyens pour mettre en oeuvre le procédé selon l'une quelconque des revendications 1 à 17.

FIG.1

FIG.3

## 200

```
                    ┌─────────┐
                    │  Début  │
                    └────┬────┘
                         │
  210 ╌╌╌╌╌╌╌╌╌╌╌╌╌╌╌╌╌╌╌╌╌╌╌╌╌╌╌╌╌╌╌╌╌╌╌╌╌
      ┌──────────────────────────────────────────┐
      │  Recevoir une liste d'objets identifiant  │──── 212
      │  la pluralité des objets du réseau réel    │
      └──────────────────┬───────────────────────┘
                         │
      ┌──────────────────────────────────────────┐
      │  Sélectionner un premier groupe d'objets  │──── 214
      │  parmi la liste d'objets                   │
      └──────────────────┬───────────────────────┘
                         │
      ┌──────────────────────────────────────────┐
      │  Générer un descriptif de groupe pour le  │──── 216
      │  premier groupe d'objet                    │
      └──────────────────┬───────────────────────┘

  220 ╌╌╌╌╌╌╌╌╌╌╌╌╌╌╌╌╌╌╌╌╌╌╌╌╌╌╌╌╌╌╌╌╌╌╌╌╌
      ┌──────────────────────────────────────────┐
      │  Sélectionner un nouveau groupe d'objets  │──── 222
      │  parmi la liste d'objets                   │
      └──────────────────┬───────────────────────┘
                         │
      ┌──────────────────────────────────────────┐
      │  Générer un descriptif de groupe pour le  │──── 224
      │  nouveau groupe d'objet                    │
      └──────────────────┬───────────────────────┘
                         │
            < Condition de fin atteinte ? >──── 226

                    ┌─────────┐
                    │   Fin   │
                    └─────────┘
```

## FIG.2

400

| Objet | |
|---|---|
| Attribut | Description |
| + Obj_ID | Identifiant de l'objet (ex. adresse IP d'un nœud réseau) |
| + Obj_type | Type de l'objet (nœud ou lien) |
| + Rel_obj | Objet associé (ID du lien associé à un nœud donné ou ID d'un nœud associé à un lien donné) |
| + Res1_ID | Identifiant de la ressource Res1 |
| + Res1_type | Type de la ressource Res1 (ex. RAM, CPU, IF, etc.) |
| + Res1_value | Valeur de la ressource Res1 (ex. pourcentage d'usage) |
| . . | |
| + Resn_ID | Identifiant de la ressource Resn |
| + Resn_type | Type de la ressource Resn (ex. RAM, CPU, IF, etc.) |
| + Resn_value | Valeur de la ressource Resn (ex. pourcentage d'usage) |

402    404

410

| Ressource | |
|---|---|
| Attribut | Description |
| + Res1_ID | Identifiant de la ressource Res1 |
| + Res1_type | Type de la ressource (ex. Flow) |
| + Res1_subtype1 | Sous-type 1 de la ressource Res1 (ex. proto_type) |
| + Res1_subtype1_value | Valeur du sous-type 1 de la ressource Res1(ex. TCP) |
| + Res1_ subtype2 | Sous-type 2 de la  Res1 (ex. in_port) |
| + Res1_ subtype2_value | Valeur du sous-type 2 de la ressource Res1 (c.à.d, num de port d'entrée) |
| + Res1_ subtype3 | Sous-type 3 de la ressource  Res1 (ex. out_port) |
| + Res1_ subtype3_value | Valeur du sous-type 3 de la ressource Res1 (c.à.d, num de port de sortie) |
| . . | |
| + Res1_ subtypem | Sous-type m de la ressource  Res1 |
| + Res1_ subtypem_value | Valeur du sous-type m de la ressource Res1 |

412    414

FIG.4

<u>500</u>

```
        ┌────────────┐
        │   Début    │
        └─────┬──────┘
              │
              ▼
   ┌──────────────────────┐
   │  Initialisation du NDT │  ──── 502
   └──────────┬───────────┘
              │
              ▼
   ┌──────────────────────┐
   │ Sélection d'un groupe cible │  ──── 504
   │    CL1 {nœuds, liens}  │
   └──────────┬───────────┘
              │
              ▼
   ┌──────────────────────┐
   │  Collecte des informations │  ──── 506
   │     associées au CL1   │
   └──────────┬───────────┘
              │
              ▼
   ┌──────────────────────┐
   │ Génération et stockage du │  ──── 508
   │    descriptif du CL1   │
   └──────────┬───────────┘
              │
              ▼
   ┌──────────────────────┐
   │  Envoi du descriptif CL1 │  ──── 510
   │     au GUI du NDT     │
   └──────────┬───────────┘
              │
              ▼
        ┌────────────┐
        │    Fin     │
        └────────────┘
```

# FIG.5

FIG.6a

FIG.6b

604

Synchronisation

CL2

614

600 → (PTN)

(NDT) ← 610

FIG.6c

CL3

606

616

Synchronisation

600 → (PTN)

(NDT) ← 610

FIG.6d

EP 4 576 700 A1

19

700

```
              ┌─────────────┐
              │    Début    │
              └─────────────┘
                     │
                     ▼
        ┌───────────────────────────┐
        │  Sélection du groupe cible │─── 702
        │  CL1 {nœuds, liens}(i>1)   │
        └───────────────────────────┘
                     │
                     ▼
                   ╱─────────────────────╲
        Non       ╱ (CLi_objets ⊄ CLj_objets) ╲ ─── 704
       ◄─────────◄  et (CLj_objets ⊄ CLi_objets) ►
                   ╲  ∀j ∈ [1,i-1 ]        ╱
                    ╲─────────────────────╱
                             │ Oui
                             ▼
        ┌───────────────────────────┐
        │  Collecte des informations │─── 706
        │     associées au CLI       │
        └───────────────────────────┘
                     │
                     ▼
        ┌───────────────────────────┐
        │  Génération et stockage du │─── 708
        │     descriptif du CLi      │
        └───────────────────────────┘
                     │
                     ▼
        ┌───────────────────────────┐
        │   Envoi du descriptif CLi  │─── 710
        │      au GUI du NDT         │
        └───────────────────────────┘
                     │
                     ▼
              ┌─────────────┐
              │     Fin     │
              └─────────────┘
```

FIG.7

802 — Groupement initial (CL1)

804 — Groupement intermédiaire (CL1)
(CL2 avec prédiction de CL1)

806 — Groupement intermédiaire (CL3
et prédiction de CL1 et CL2)

808 — Groupement intermédiaire (CL4
et prédiction de CL1 à CL3)

810 — (Phase post-groupement :
prédiction de CL1 à CL4)

812 — (Phase post-groupement :
re-synchronisation du groupement
CL1 et prédiction de CL2 à CL4)

Légende :
⬤ Synchronisation du groupement    ◯ Prédiction du groupement

FIG.8

EP 4 576 700 A1

900

Début

Sélection d'un groupe existant : CLi
1 ≤ i ≤ n — 902

Collecte des informations
associées au CLi_réel — 904

Génération et stockage du
descriptif du CLi_réel — 906

Calcule Ecart ( CLi_réel, CLi_pred) — 908

Envoi Ecart ( CLi_réel, CLi_pred)
au modèle de prédiction du NDT — 910

Oui    desc_CLi_réel ~
desc_CLi_pred ? — 912

Non

desc_CLi = desc_CLi_réel — 914

Envoi du descriptif CLi_réel
au GUI du NDT — 916

Fin

FIG.9

Europäisches
Patentamt

European
Patent Office

Office européen
des brevets

## RAPPORT DE RECHERCHE EUROPEENNE

Numéro de la demande

EP 24 21 8823

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/265329 A1 (THOMSEN JOACHIM [DE] ET AL) 20 août 2020 (2020-08-20) <br> * alinéa [0004] - alinéa [0005] * <br> * alinéa [0070] - alinéa [0071] * <br> * alinéa [0086] * <br> * alinéa [0098] * <br> * alinéa [0112] * <br> * alinéa [0124] - alinéa [0131] * <br> * alinéa [0147] - alinéa [0160] * <br> * alinéa [0170] * <br> * alinéa [0181] - alinéa [0185] * <br> * alinéa [0195] - alinéa [0197] * <br> * alinéa [0222] - alinéa [0234] * <br> * alinéa [0245] - alinéa [0251] * <br> * alinéa [0264]; figures 6-8,12,15,16,41,44b * <br> ----- | 1-11, 13-19 | INV. <br> H04L41/084 <br> H04L41/14 <br> H04L41/147 <br> H04L41/0266 <br> H04L41/12 |
| X | KALASAPURA DEEPTI ET AL: "TwinSync: A Digital Twin Synchronization Protocol for Bandwidth-Limited IoT Applications", 2023 32ND INTERNATIONAL CONFERENCE ON COMPUTER COMMUNICATIONS AND NETWORKS (ICCCN), IEEE, 24 juillet 2023 (2023-07-24), page 1, XP034413898, DOI: 10.1109/ICCCN58024.2023.10230154 <br> * page 2 - page 5; figure 1 * <br> ----- | 1,3-5, 9-12,18, 19 | |
| X | MOYNE JAMES ET AL: "A Requirements Driven Digital Twin Framework: Specification and Opportunities", IEEE ACCESS, IEEE, USA, vol. 8, 4 juin 2020 (2020-06-04), pages 107781-107801, XP011793770, DOI: 10.1109/ACCESS.2020.3000437 <br> * page 107783 - page 107786 * <br> * page 107789 - page 107791; figure 2 * <br> ----- | 1,3-5, 18,19 | |

**DOMAINES TECHNIQUES RECHERCHES (IPC)**

H04L
G05B

Le présent rapport a été établi pour toutes les revendications

| Lieu de la recherche | Date d'achèvement de la recherche | Examinateur |
|---|---|---|
| Munich | 9 avril 2025 | Camba, Sonia |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 8823

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-04-2025

| Document brevet cité au rapport de recherche | Date de publication | Membre(s) de la famille de brevet(s) | Date de publication |
|---|---|---|---|
| US 2020265329 A1 | 20-08-2020 | CN 111562769 A | 21-08-2020 |
| | | CN 116414089 A | 11-07-2023 |
| | | EP 3696622 A1 | 19-08-2020 |
| | | US 2020265329 A1 | 20-08-2020 |
| | | US 2022277212 A1 | 01-09-2022 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. ZHOU et al.** Digital Twin Network: Concepts and Référence Architecture. *Internet Draft*, July 2023

- **L. U. KHAN et al.** Digital-Twin-Enabled 6G: Vision, Architectural Trends, and Future Directions. *IEEE Communications Magazine*, 2022, 74-80